Europäisches Patentamt

European Patent Office

Office européen des brevets

(11) Veröffentlichungsnummer : **0 393 393 B1**

(12) **EUROPÄISCHE PATENTSCHRIFT**

(45) Veröffentlichungstag der Patentschrift :
**25.03.92 Patentblatt 92/13**

(21) Anmeldenummer : **90105887.5**

(22) Anmeldetag : **28.03.90**

(51) Int. Cl.⁵ : **F01M 11/03, B01D 29/11**

(54) **Filtergehäuse für einen Nebenstrom-Ölfilter für die Feinstfilterung bei Ölfilteranlagen an Motoren insb. Dieselmotoren.**

(30) Priorität : **21.04.89 DE 3913095**

(43) Veröffentlichungstag der Anmeldung :
**24.10.90 Patentblatt 90/43**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
**DE-U- 8 417 485**
**FR-A- 2 295 230**
**US-A- 2 870 914**
**US-A- 3 036 711**

(73) Patentinhaber :
**NTZ-OEL-FILTER-TECHNIK-GMBH.**
**Jahnstrasse 13**
**W-5810 Witten, Ruhr (DE)**

(72) Erfinder : **Neuber, Walter**
**Jahnstrasse 13**
**W-5810 Witten/Ruhr (DE)**
Erfinder : **Teschen, Joachim, Kfz.-Ing.**
**Laubecksweg 9**
**W-4330 Mülheim/Ruhr (DE)**

EP 0 393 393 B1

EP 0 393 393 B1

## Beschreibung

Die Erfindung betrifft ein Filtergehäuse für einen Ölfilter für die Feinstfilterung im Nebenstrom bei Ölfilteranlagen an mobilen oder stationären Motoren , d.h. Otto-Motoren und insbesondere Diesel-Motoren.

Durch den Einsatz solcher Nebenstrom-Ölfilter soll eine hohe Ölreinheit und somit eine längere Standzeit des Ölumlaufes erreicht werden. Solche Filter bestehen in der Regel aus einem Filtergehäuse, welches für die Aufnahme des Filtereinsatzes, d.h. der Filterpatrone eingerichtet ist. Solche Filtereinsätze haben als kern eine perforierte Pappröhre, auf welcher das Filterpapier aufgewickelt ist.

So ist z.B. eine Nebenstrom-Ölfilterausführung bekannt geworden, bei welcher der Filterkörper aus drei Hauptteilen und zwar einem Gehäusemittelteil, einem Deckel und einem Bodenstück besteht, wobei hier der Ölzufluß außermittig und tangential im Bodenstück des Gehäuses erfolgt und der Ölabfluß zentrisch im gleichen Bodenstück angebracht st. Bei dieser Ausführung mündet der Ölzufluß in einen Ringkanal. Durch diese Anordnung des Ölzuflusses und des Ölabflusses wird praktisch im Ölfluß ein Gleichstromverfahren erzielt und die Stichleitungen des Ringkanales sind spitzwinkelig oder rechtwinkelig mit dem Ölzufluß verbunden und gegen die Innenwandlung des Filtergehäuses gerichtet. Es ist zwar hier erreicht, daß das einströmende Öl über vorhandenen Ringkanal umseitig von außen her in den Filtereinsatz eindringt und von dort und dort zu dessen Mittelachse in dem perforierten Papprohr abfließt, aber es hat sich gezeigt, daß hier die Stabilität und Form der Filterpatrone doch noch nachteilig beeinflusst wird. ( DE-OS 30 13 762 )

Diese aufgezeigten Nachteile sollen nach der vorliegenden Erfindung vermieden werden.

Der Erfindung liegt daher die Aufgabe zugrunde den Ölzufluß so zu steuern, daß die Filterpatrone nicht nachteilig beeinflusst wird und ihre volle Funktionsfähigkeit gleichbleibend behält und das Filtergehäuse gewichtsmäßig leichter und einfacher ausgebildet wird.

Dies wird bei einem solchen Nebenstromfilter dadurch erreicht, daß der stromabgelegene Endteil der außermittigen Drucköleinleitung als eine geneigte auf der Oberfläche des Gehäusebodens mündende und zur Gehäusekörperinnenwand gerichtete Stichleitung ausgebildet ist und ein mittiger Ölabfluß im Gehäuseboden vorhanden ist und das ganze Gehäuse aus einem einteiligen Alu-Gußkörper ausgebildet ist, wobei der Gehäuseboden auf seiner Oberfläche eine Leitrippe aufweist, die zwischen der Mündung der Stichleitung und dem Filterelement als Grundbestandteil des Gehäusebodens ausgebildet ist. Diese Leitrippe ist kreissegmentförmig und nur seitlich abschirmend auf einem Abstand und einem Abschnitt des Gehäusebodens vorspringend gestaltet und angebracht ist. Die Leitrippe ist ferner ins Innere des Gehäusekörpers derart hochgezogen gestaltet, daß sie gleichzeitig mit ihrer zur Gehäusemittelachse zeigenden Seitenfläche bei leichter Kompression für die Führung des Filtereinsatzes / Filterpatrone vorgesehen ist. Bei bestimmten Erfordernissen und bei besonderer Gehäusekonstruktion kann diese Leitrippe auch als kreisförmige am ganzen Gehäuseboden Ringrippe gestaltet werden.

Zum Zwecke der Gewichtserleichterung ist das gesamte Filtergehäuse als Alu-Grußkörper ausgebildet und das Gehäuse mit einem oberen Gehäusedeckel versehen, an dessen hochgezogener Deckelumrandung zinnenartige Randausnehmungen angebracht sind. Durch diese Deckelausbildung wird außerdem eine leichtere Handhabung des Gehäusedeckels beim Einsetzen oder Entfernen der Filterpatrone erreicht.

Bei diesem Filtergehäuse ist ferner die Bodenfläche so ausgelegt, daß eine Führung, Zentrierung und Auflageabdichtung der Filterpatrone ohne Zwischenboden erreicht ist.

Diese Ausbildung ergibt die Vorteile, daß der gesamte Nebenstrom-Ölfilter gewichtsmäßig leichter und in der Gesamtkonstruktion kleiner als die bisher üblichen Filtergehäuse ausgeführt werden kann. Die weiteren Vorteile bestehen darin, daß der Ölzufluß am Außenumfang der Filterpatrone entlang der Innenwandlung des Gehäuses gesteuert wird und ein leichte Kompression der Filterpatrone von außen erfolgt. Ferner wird dadurch auch beim Auftreten Ölwirbeln die Stabilität und die Form der Filterpatrone erhalten und somit deren gleichbleibende Funktion gesichert.

Ein Ausführungsbeispiel nach der Erfindung ist in der anliegenden Zeichnung dargestellt.

Es zeigen:

Fig.1 einen senkrechten Schnitt durch das Filtergehäuse und

Fig.2 eine Aufsicht von oben auf das Filtergehäuse nach Fig.1 mit geschnittener Leitrippe und dem Zentrieranschlang am Gehäuseboden.

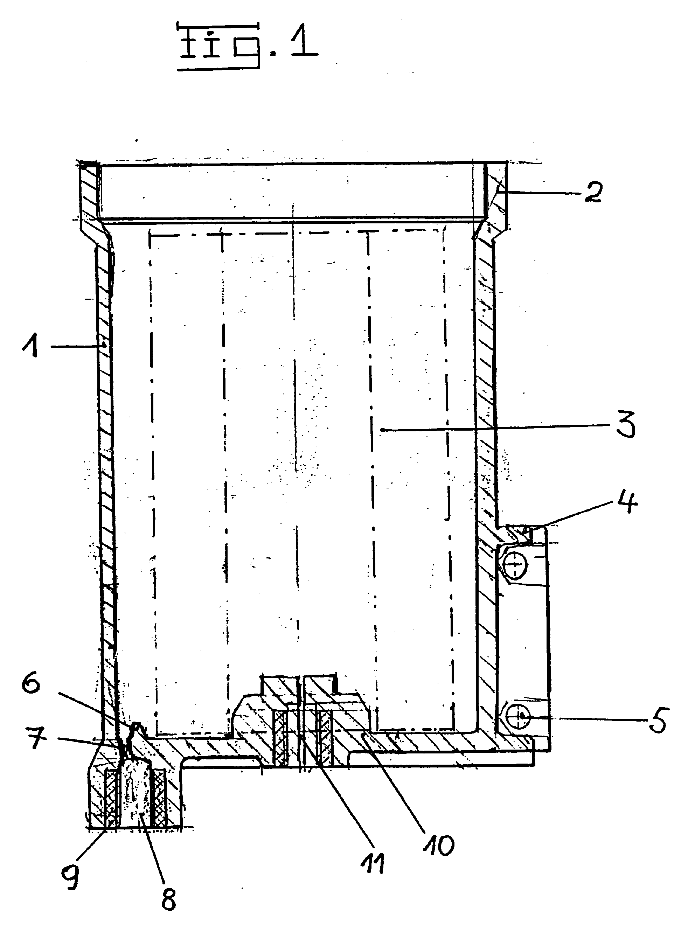

Das Filtergehäuse für den Nebenstrom-Ölfilter ist als einteiliger Alu-Gußkörper ausgebildet und das Gehäuse 1 ist vorteilhaft zylindrisch gestaltet. Aus Fig.1 der Zeichnung ist zu erkennen, daß das Gehäuse 1 einen Gehäuseboden 10 ohne Zwischenboden besitzt und in der Mitte des Gehäusebodens 10 ein Zentrierblock vorgesehen ist. Der Ölzufluß 8 ist außermittig in dem Gehäuseboden 10 angeordnet und die hier vorhandene Bohrung wird mit einem Innengewinde oder einer Büchse 9 ausgestattet. Über diese Büchse 9 wird die Zuführungsleitung an dem Innengewinde der Bohrung befestigt. Der Ölzufluß 8 mündet in die zur Gehäuseinnenwand geneigt angeordnete Stichleitung 7, die ihrerseits an der Austrittsöffnung zur Steuerung des Ölflusses

2

durch die zusätzliche Leitrippe 6 begrenzt wird.

Der Körper des Filtergehäuses 1 wird vorteilhaft am Kopfende zur Einführungsöffnung für den Filtereinsatz mit einer nach außen gehenden Kröpfung 2 versehen, die zur Aufnahme und zum Anschluß des in der Zeichnung nicht dargestellten oberen Gehäusedeckels dient. In dem mittigen Zentrierblock am Gehäuseboden 10 ist ferner der Ölabfluß vorgesehen. Der Filtereinsatz bzw. die Filterpatrone ist nur angedeutet dargestellt und mit 3 bezeichnet. Diese besteht aus der Filterpapierwicklung und als Kern der perforierten Pappröhre. Diese Pappröhre setzt sich, wie die Darstellung in Fig.1 erkennen lässt, auf den Zentrierblock im Gehäuseboden 10 und der nicht dargestellte Gehäusedeckel hat an seiner Unterfläche ebenfalls einen vorspringenden Bund, mit welchem er von oben in die Pappröhre eingreift und diese in Richtung Gehäuseboden 10 andrückt.

Mit 4 ist die angegossene Befestigungsvorrichtung des Filtergehäuse 1 bezeichnet, welche die Bohrungen 5 aufweist. Diese Bohrungen 5 sind zur Aufnahme der Klemm- und Festlegeelemente bestimmt.

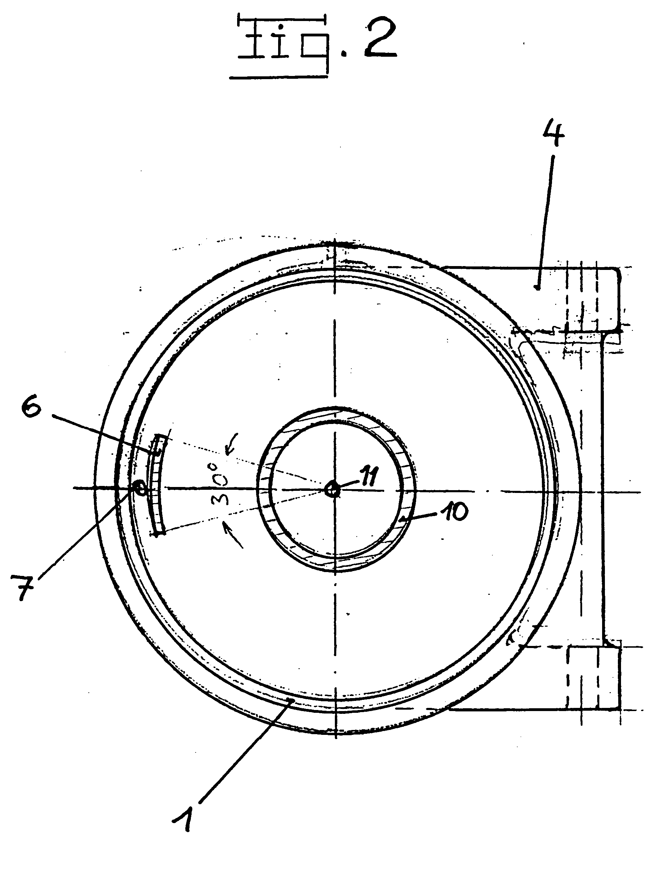

Aus der Darstellung in Fig.1 ist weiter zu erkennen, daß die Leitrippe 6 im Bereich des Austrittes des Ölzuleitungsöffnung mit einem Abstand von der Innenwandung des Gehäuses 1 und gleichzeitig ins Innere des Gehäusekörpers des Filtergehäuses 1 vorspringend hochgezogen ist. Aus der Darstellung nach Fig.2 lässt sich ersehen, daß diese Leitrippe 6 entweder als Kreissegment auf einem Abschnitt des Gehäusebodens 10 angebracht ist oder als kreisförmige und am ganzen Gehäuseboden verlaufende Ringrippe gestaltet ist. Das ganze 1 ist als Alu-Gußkörper einteilig ausgeführt.

Aus der Darstellung des erfindungsgemäß ausgeführten Filtergehäuses 1 ist zu erkennen, daß eine Zentrierung und Auflageabdichtung der Filterpatrone 3 erfolgt und der Gehäuseboden 10 ohne Zwischenboden gestaltet ist. Die Leitrippe 6 steuert das einfließende Öl aus dem Ölzufluß 8 von außen an den Außenmantel der Filterpatrone 3 derart, daß zwar eine leichte Kompression der Filterpatrone 3 von außen erfolgt aber gleichzeitig der direkte Strom des einfließenden Öles an einem Auftreffen von außen auf die Filterpatrone 3 gehindert ist. Die Filterpatrone 3 bleibt somit auch bei einem Auftreten von Ölwirbeln stabil und ihrer Formgestaltung erhalten und garantiert eine gleichbleibende Filterfunktion. Die Stichleitung 7 ist Teil und Bestandteil der Öleinleitung und sie ist praktisch am Rande des Gehäusebodens im Innenraum des Gehäusekörpers vorgesehen.

## Patentansprüche

1. Filtergehäuse (1) für einen Ölfilter für die Feinstfiltration im Nebenstrom bei Ölfilteranlagen an Motoren, insbesondere Dieselmotoren, und zur Erreichung einer hohen Ölreinheit, wobei das Gehäuse einen Filtereinsatz oder eine Filterpatrone (3) aufnimmt, die ihrerseite aus auf einer perforierten Pappröhre aufgewickeltem Filterpapier besteht und welches einen Zylindrischen Gehäusekörper und einen Gehäuseboden aufweist, wobei eine außermittige Drucköleinleitung (8), deren stromabgelegenes Endteil als eine geneigte auf der Oberfläche des Gehäusebodens mündende und zur Gehäusekörperinnenwand gerichtete Stichleitung (7) ausgebildet ist, und ein mittiger Ölabfluß (11) im Gehäuseboden versehen sind, **dadurch gekennzeichnet**, daß
a) das ganze Gehäuse (1) aus einem einteiligen Alu-Gußkörper ausgebildet ist,
b) der Gehäuseboden auf seiner Oberfläche eine Leitrippe (6) aufweist, die zwischen der Mündung der Stichleitung (7) und dem Filterelement (3) als Grundbestdandteil des Gehäusebodens ausgebildet ist.

2. Filtergehäuse nach Anspruch 1, **dadurch gekennzeichnet**, daß die Leitrippe (6) kreissegmentförmig und nur seitlich abschirmend auf einem Abstand und einem Abschnitt des Gehäusebodens vorspringend gestaltet ist.

3. Filtergehäuse nach Ansprüchen 1 und 2, **dadurch gekennzeichnet**, daß die Leitrippe (6) ins Innere des Gehäusekörpers (1) derart hochgezogen ist, daß sie gleichzeitig mit ihrer zur Gehäusemittelachse zeigenden Seitenfläche bei leichter Kompression für die Führung des Filtereinsatzes (3) / Filterpatrone vorgesehen ist.

4. Filtergehäuse nach den Ansprüchen 1 bis 3, **dadurch gekennzeichnet**, daß die Leitrippe als kreisförmige nur auf einem Abschnitt des Gehäusebodens verlaufende Rippe gestaltet ist.

5. Filtergehäuse nach Ansprüchen 1 bis 4, **dadurch gekennzeichnet**, daß der Gehäusekörper zum Zwecke der Gewichtserleichterung und der leichteren Handhabung mit einem oberen Gehäusedeckel versehen ist, an dessen hochgezogener Deckelumrandung zinnenartige Randausnehmungen angebracht sind.

## Claims

1. Filter casing (1) for an oil filter for superfine filtration in a by-pass flow in oil filtration assemblies on engines, especially diesel engines, and to achieve a high oil purity, where the casing bears a filter unit or a filter cartridge (3) which for its part consists of filter paper wound on a perforated cardboard tube, and which comprises a cylindrical casing body and a casing base, with an eccentric oil pressure line (8) whose downstream end is designed as an oblique stub (7) opening onto the surface of the casing bottom and orientated towards the internal wall of the casing body, and a central outflow (11) located in the casing bottom, characterized in that

a) the entire casing (1) takes the form of a one-part cast aluminium body,

b) the casing bottom has a guiding rib (6) formed between the outlet of the stub (7) and the filter element (3) as a basic component of the casing bottom.

2. Filter casing as claimed in Claim 1, characterized in that the guiding rib (6) is designed to protect at a distance and from a section of the casing bottom in circular segmental form and only laterally protective.

3. Filter casing as claimed in Claims 1 and 2, characterized in that the guiding rib (6) continues up into the interior of the casing body (1) in such a way that it is simultaneously intended to guide the filter unit (3) / filter cartridges along the lateral surface facing the central axis of the casing on light compression.

4. Filter casing as claimed in Claims 1 to 3, characterized in that the guiding rib takes the form of a circular rib running along only one section of the casing bottom.

5. Filter casing as claimed in Claims 1 to 4, characterized in that for the purpose of easing the weight and easier handling the casing body is fitted with a casing cover at the top to the extended edge of which cover crenellation-type recesses are applied.


## Revendications

1. Boîtier de filtre (1) pour un filtre à l'huile pour le filtrage fin dans le courant dérivé d'installations de filtrage d'huile de moteurs, en particulier de moteurs diesel, ainsi que pour l'obtention d'une pureté d'huile élevée, le boîtier abritant une cartouche-filtre ou un élément filtrant (3) qui, de son côté, est constitué par un papier filtre enroulé sur un cylindre en carton perforé et présentant un corps de boîtier avec une introduction d'huile sous pression exentrique (8), dont la partie d'extrémité en aval du courant a la forme d'un tronçon de ligne (7) incliné débouchant sur la surface du fond du boîtier et dirigé vers la paroi intérieure du boîtier, et avec une évacuation d'huile centrale (11) dans le fond du boîter, caractérisé en ce que

a) la totalité du boîtier (1) est constituée d'un corps en fonte d'aluminium d'une seule pièce

b) le fond du boîtier présente à sa surface une nervure de guidage (6) qui forme l'élément principal du fond du boîtier entre l'embouchure du tronçon de ligne (7) et l'élément filtrant (3).

2. Boîtier de filtre selon la revendication 1, caractérisé en ce que la nervure de guidage (6) a la forme d'un segment de cercle et est en saillie avec protection latérale uniquement sur une certaine distance et une section du fond du boîtier.

3. Boîtier de filtre selon les revendications 1 et 2, caractérisé en ce que la nervure de guidage (6) est remontée à l'intérieur du corps du boîtier (1) de manière telle qu'elle est prévue simultanément avec sa surface latérale dirigée vers l'axe du boîtier, en cas de compression l'égère, pour le guidage de l'élément filtrant (3) / cartouche-filtre.

4. Boîtier de filtre selon les revendications 1 à 3, caractérisé en ce que la nervure de guidage a la forme d'un segment de cercle sur uniquement une section du fond du boîtier.

5. Boîtier de filtre selon les revendications 1 à 4, caractérisé en ce que le corps du boîtier, pour l'allègement du poids et une manipulation plus facile, est doté d'un couvercle supérieur sur le rebord du couvercle surélevé duquel des évidements marginaux sont disposés à l'instar de créneaux.

# Fig.1

# Fig.2